# EUROPEAN PATENT APPLICATION

(11) **EP 4 480 585 A1**
(43) Date of publication of application: **25.12.2024**
(21) Application number: 22935009.5
(22) Date of filing: 28.03.2022
(51) Int. Cl.: B03C 7/12, B29B 17/02, G01R 29/24, G01N 27/60

(54) **ELECTROSTATIC SORTING DEVICE**

(71) Applicant: MITSUBISHI ELECTRIC CORPORATION, Chiyoda-ku Tokyo 100-8310 (JP)
(72) Inventor: NAKAMURA Yasuhiro, Tokyo 100-8310 (JP); INANAGA Yasutaka, Tokyo 100-8310 (JP); YAMADA Shota, Tokyo 100-8310 (JP)
(74) Representative: Meissner Bolte Partnerschaft mbB
(86) International application number: PCT/JP2022/014794
(87) International publication number: WO 2023/187854

(57) **Abstract**

An electrostatic sorting device (500) charges plural kinds of mixed resin pieces (100), conveys the charged resin pieces (100a, 100b) to an electrostatic field space, and causes them to fall while being displaced in the electrostatic field space, to sort the resin pieces (100a, 100b). The electrostatic sorting device (500) includes an automatic charge amount measurement system (7) which measures the charge amounts of the resin pieces (100a, 100b). The automatic charge amount measurement system (7) picks some of the resin pieces (100a, 100b) during the conveyance, and measures the charge amounts of the picked resin pieces (100a, 100b) .

## Description

### TECHNICAL FIELD

The present invention relates to an electrostatic sorting device.

### BACKGROUND ART

When a mixture of fragments of plural kinds of materials is, for example, agitated so that the materials are rubbed against each other, they are charged with a charge sign and a charge amount according to the kinds of the materials and the composition of the mixture.

For example, in a resin recycling process, using the above feature, charged mixed resin pieces are caused to fall into an electrostatic field space between high-voltage electrodes and then are displaced by an electrostatic force, thus performing electrostatic sorting to sort the resin pieces on a material basis.

For example, as shown in Patent Document 1, it is proposed that an electrostatic field space is formed between a ground electrode of a roller type and a high-voltage electrode having a flat-plate shape, to electrostatically sort mixed resin pieces.

### CITATION LIST

### PATENT DOCUMENT

Patent Document 1: Japanese Laid-Open Patent Publication JP 2004- 195 303 A (paragraphs [0014] to [0015] and FIG. 1)

### SUMMARY OF THE INVENTION

### PROBLEM TO BE SOLVED BY THE INVENTION

However, the method in Patent Document 1 has a problem that a foreign material is mixed due to charging defect of resin pieces.

The present invention has been made to solve the above problem, and an object of the present invention is to provide an electrostatic sorting device having a function that can measure automatically and in real time the charge amount of each one of picked resin pieces that have just been charged.

### MEANS TO SOLVE THE PROBLEM

An electrostatic sorting device according to the present invention charges plural kinds of resin pieces and causes the charged resin pieces to fall in the electrostatic field space, to sort the resin pieces, the electrostatic sorting device including a charge amount measurement system which calculates charge amounts of the resin pieces, wherein the charge amount measurement system picks some of the charged resin pieces before the sorting, and calculates the charge amounts of the picked resin pieces.

### EFFECT OF THE INVENTION

According to the present invention, in a case where a charge amount tendency different from that in a normal case is detected, a measure such as stopping a line can be taken, whereby it is possible to optimize a sorting condition and prevent a foreign material from being mixed due to charging defect of resin pieces.

### BRIEF DESCRIPTION OF THE DRAWINGS

FIG. 1 is a configuration diagram showing an electrostatic sorting device according to Embodiment 1.
FIG. 2 is a configuration diagram of an automatic charge amount measurement system in the electrostatic sorting device according to Embodiment 1.
FIG. 3 is a configuration diagram showing the details of a put-in section of an electrostatic sorting device according to Embodiment 2.
FIG. 4 is a configuration diagram showing an electrostatic sorting device according to Embodiment 3.

### DESCRIPTION OF EMBODIMENTS

### Embodiment 1

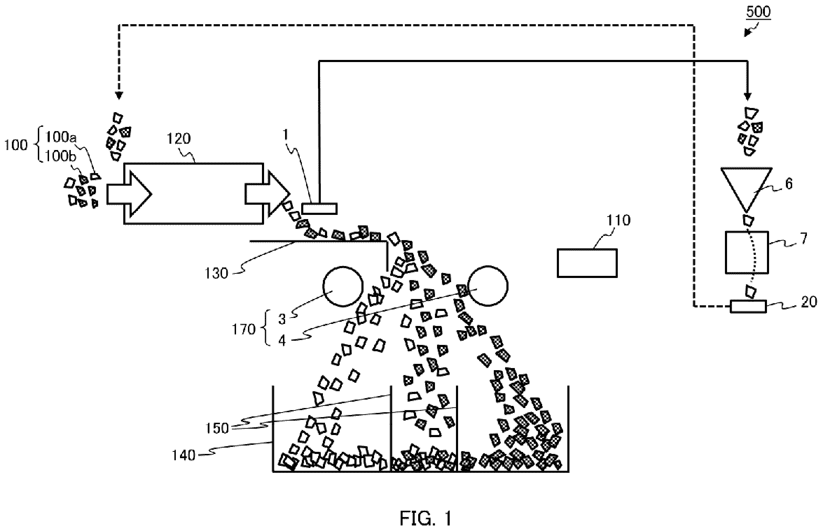

FIG. 1 shows the configuration of an electrostatic sorting device 500 according to Embodiment 1 of the present invention. As shown in FIG. 1, the electrostatic sorting device 500 includes a charging section 120 for agitating a sorting target 100 which is a mixture of flaky resin pieces including plural kinds of materials so as to rub and charge the resin pieces, opposed electrodes 170 composed of a first opposed electrode 3 and a second opposed electrode 4 which form an electrostatic field space between the electrodes facing each other, a conveyance section 130 which is a vibratory feeder for conveying the sorting target 100 charged in the charging section 120 to the electrostatic field space, and a recovery container 140 provided with partitions 150 for sorting and recovering the resin pieces falling while being displaced in the electrostatic field space.

The first opposed electrode 3 is electrically grounded and is located below the conveyance section 130 and on the charging section 120 side. The second opposed electrode 4 is subjected to high voltage applied by a high-voltage power supply 110 and is located below the conveyance section 130. The second opposed electrode 4 subjected to high voltage is structurally supported with its both sides fastened by insulators (not shown).

A resin piece picking section 1 which is a vacuum loader for sucking a resin piece is provided near the conveyance section 130. A put-in section 6 for putting a resin piece downward one by one is provided on the downwind side of the resin piece picking section 1.

An automatic charge amount measurement system 7 which automatically measures the charge amount of a resin piece when the resin piece passes therethrough is provided under the put-in section 6.

A resin piece discharge section 20 for discharging or discarding the resin piece after charge amount measurement to the upstream side of the charging section is provided under the automatic charge amount measurement system 7.

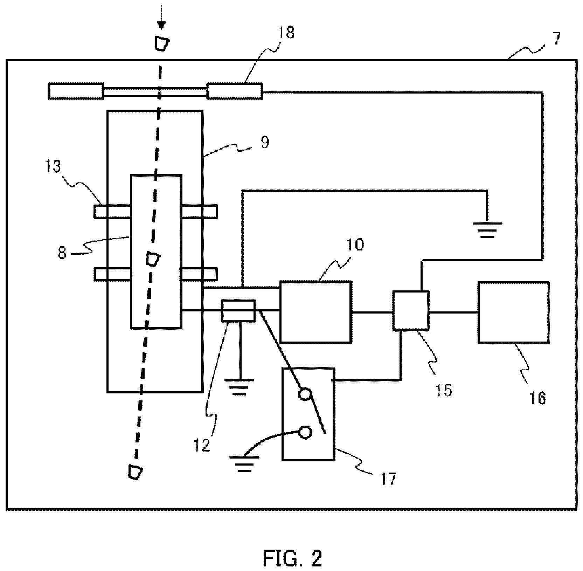

FIG. 2 is a configuration diagram showing the details of the automatic charge amount measurement system 7 in the electrostatic sorting device 500 according to Embodiment 1 of the present invention. As shown in FIG. 2, the automatic charge amount measurement system 7 includes a first conductive member 8 which is a metal tube, and a second conductive member 9 which is a one-size larger metal tube surrounding the first conductive member 8.

The first conductive member 8 and the second conductive member 9 are joined to each other by insulating support parts 13 which are bolts made of polytetrafluoroethylene (PTFE) and have a high insulation resistance. The second conductive member 9 is connected to the ground. The first conductive member 8 is connected to an electrostatic induction charge waveform measurement section 10 which is an electrometer having an external input/output terminal (not shown), via a shield cable 12.

The shield cable 12 is branched to be connected to a static elimination section 17 which is a relay connected to the ground. An object detection section 18 which is an optical sensor for detecting that a resin piece is put in is provided above the first conductive member 8.

The external input/output terminal of the electrostatic induction charge waveform measurement section 10 is connected to a control section 15 which is a sequencer, together with an external input/output terminal of the static elimination section 17. The control section 15 is connected to a calculation section 16 which is a personal computer (PC), and the object detection section 18.

Next, operation of the electrostatic sorting device 500 according to Embodiment 1 of the present invention will be described with reference to FIG. 1 and FIG. 2. In this example, a case where the sorting target 100 is a mixture of fragments of two kinds of resin materials will be described. In addition, it is assumed that positive high voltage is outputted from the high-voltage power supply 110.

First, through agitation in the charging section 120, the resin materials are rubbed and charged so that one material is charged positively and the other material is charged negatively.

Subsequently, positive high voltage is applied from the high-voltage power supply 110 to the second opposed electrode 4, whereby an electrostatic field space is formed between the opposed electrodes 170.

Next, the rubbed and charged sorting target 100 (resin pieces 100a, 100b) are conveyed by the conveyance section 130 which is a vibratory feeder, to be put toward the opposed electrodes 170. At this time, between the opposed electrode 170, the resin pieces 100a, 100b are subjected to an electrostatic force so that the positively charged resin pieces 100a are attracted to the first opposed electrode 3 side (relatively negative electrode) and the negatively charged resin pieces 100b are attracted to the first opposed electrode 4 (relatively positive electrode), and thus the resin pieces 100a, 100b are separated from each other.

The resin pieces separated as described above are recovered on a material basis in the recovery container 140 under the opposed electrode 170.

Meanwhile, a part of the mixture of the resin pieces that have been rubbed and charged is sucked by the resin piece picking section 1 which is a vacuum loader.

Subsequently, the mixture of the resin pieces sucked by the resin piece picking section 1 is conveyed to be supplied to the put-in section 6. The put-in section 6 has a structure tapered downward and is provided with an open/close device. By the open/close device opening and closing at regular time intervals, the resin pieces are put one by one into the downward automatic charge amount measurement system 7 from the put-in section 6.

Next, the resin piece falling downward is detected by the object detection section 18, and at the same time, in response to a signal from the control section 15, the grounding inside the static elimination section 17 is opened, so that the grounding of the first conductive member 8 is opened.

Thereafter, the resin piece falls and passes near the first conductive member 8. Normally, the first conductive member 8 is electrically connected to the ground via the static elimination section 17.

At this time, the charge waveform (waveform of current or voltage) of charge electrostatically induced to the first conductive member 8 by charge of the resin piece is measured by the electrostatic induction charge waveform measurement section 10, and a charge waveform signal is transmitted to the calculation section 16 via the control section 15.

Subsequently, the calculation section 16 calculates an amplitude value or a time integral value of the charge waveform, and substitutes the calculated value into a linear relational formula with respect to a result of charge amount measurement by a commercial Faraday cup, obtained through an experiment in advance, thereby converting the above value to a charge amount.

After the resin piece has come out of the first conductive member 8, the grounding inside the static elimination section 17 is electrically connected in response to a signal from the control means 15, so that the grounding of the first conductive member 8 is electrically connected.

As described above, in the period other than when the resin piece is put in, the first conductive member 8 is always electrically connected to the ground, whereby measurement accuracy can be prevented from being lowered by the first conductive member 8 being charged up.

Thereafter, the resin piece that has come out of the first conductive member 8 is sucked by the resin piece discharge section 20 and then is supplied to the charging section 120 again.

Through repetition of the above operation, the charge amount of each one of the picked resin pieces can be measured automatically and in real time, and data of the charge amount of each one of the resin pieces is accumulated in the calculation section 16 which is a PC.

In addition, in a case where a charge amount tendency different from that in a normal case is detected, a measure such as stopping a line can be taken, whereby it is possible to optimize a sorting condition and prevent a foreign material from being mixed due to charging defect of resin pieces.

As described above, the electrostatic sorting device 500 according to the present Embodiment 1 charges plural kinds of resin pieces 100 and causes the charged resin pieces 100a, 100b to fall in an electrostatic field space, to sort the resin pieces 100a, 100b, and the electrostatic sorting device 500 includes the automatic charge amount measurement system 7 which calculates the charge amounts of the resin pieces 100a, 100b.

The automatic charge amount measurement system 7 picks some of the resin pieces 100a, 100b before the sorting, and calculates the charge amounts of the picked resin pieces 100a, 100b. Thus, in a case where a charge amount tendency different from that in a normal case is detected, a measure such as stopping a line can be taken, whereby it is possible to optimize a sorting condition and prevent a foreign material from being mixed due to charging defect of resin pieces.

In addition, the automatic charge amount measurement system 7 includes the object detection section 18 which detects each picked resin piece 100a, 100b, the electrostatic induction charge waveform measurement section 10 which measures the charge waveform of charge electrostatically induced by charge of the detected resin piece 100a, 100b, and the calculation section 16 which calculates the charge amount on the basis of the charge waveform. Thus, the charge amount of each one of the picked resin pieces can be measured automatically and in real time.

Further, the automatic charge amount measurement system 7 includes the tubular first conductive member 8 into which the resin piece 100a, 100b is put, and for the electrostatic induction charge waveform measurement section 10 to measure the charge waveform of the put resin piece 100a, 100b via the first conductive member 8, the first conductive member 8 is provided with the static elimination section 17 for making connection to the ground.

At the same time as the resin piece 100a, 100b is detected by the object detection section 18, connection to the ground is opened. Thus, measurement accuracy can be prevented from being lowered by the first conductive member being charged up.

### Embodiment 2

In Embodiment 1, a case where resin pieces are put one by one into the downward automatic charge amount measurement system 7 from the put-in section 6 has been described. In Embodiment 2, a case where resin pieces are put in by a conveyer will be described.

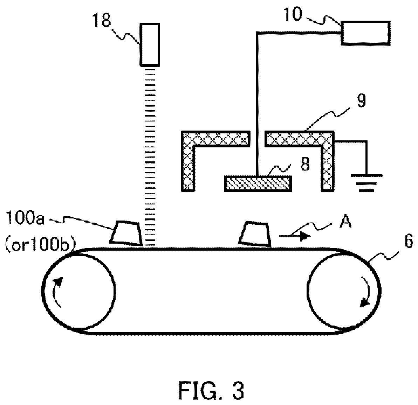

FIG. 3 is a configuration diagram showing the details of the put-in section 6 of the electrostatic sorting device 500 according to Embodiment 2 of the present invention. As shown in FIG. 3, in Embodiment 2 of the present invention, the put-in section 6 is a conveyer, and the plate-shaped first conductive member 8 is provided above the put-in section 6, and the second conductive member 9 is provided at a certain distance upward from the first conductive member 8 so as to cover the first conductive member 8.

The other configuration of the electrostatic sorting device 500 according to Embodiment 2 is the same as that of the electrostatic sorting device 500 according to Embodiment 1, and the description thereof is omitted.

Next, operation of the electrostatic sorting device 500 according to Embodiment 2 of the present invention will be described with reference to FIG. 3.

The resin piece 100a (or 100b) sucked by the resin piece picking section 1 is conveyed to be supplied onto the put-in section 6 which is a conveyer, unlike Embodiment 1 in which the resin piece is put into the put-in section tapered downward.

Subsequently, through rotation of a belt of the put-in section 6, the resin piece 100a (or 100b) is conveyed in a direction A. In a case where a large number of resin pieces are put densely, they may be thinned out by means such as automatically blowing air to the resin pieces.

Next, an object is detected when the resin piece passes directly under the object detection section 18 which is an optical sensor, and at the same time, in response to a signal from the control section 15, the grounding inside the static elimination section 17 is opened, so that the grounding of the first conductive member 8 is opened. Thereafter, the resin piece passes near the first conductive member 8 by being conveyed on the conveyer.

At this time, the charge waveform of charge (current or voltage) electrostatically induced to the first conductive member 8 by charge of the resin piece is measured by the electrostatic induction charge waveform measurement section 10, and a charge waveform signal is transmitted to the calculation section 16 via the control section 15.

Subsequently, the calculation section 16 calculates an amplitude value or a time integral value of the charge waveform, and substitutes the calculated value into a linear relational formula with respect to a result of charge amount measurement by a commercial Faraday cup, obtained through an experiment in advance, thereby converting the above value to a charge amount.

After the resin piece has passed near the first conductive member 8, the grounding inside the static elimination section 17 is electrically connected in response to a signal from the control section 15, so that the grounding of the first conductive member 8 is electrically connected.

As described above, in the period other than when the resin piece passes near the first conductive member 8, the first conductive member 8 is always electrically connected to the ground, whereby measurement accuracy can be prevented from being lowered by the first conductive member 8 being charged up.

Thereafter, the resin piece that has passed near the first conductive member 8 is sucked by the resin piece discharge section 20 and then is supplied to the charging section 120 again.

Through repetition of the above operation, the charge amount of each one of the picked resin pieces can be measured automatically and in real time, and data of the charge amount of each one of the resin pieces is accumulated in the calculation section 16 which is a PC.

In addition, in a case where a charge amount tendency different from that in a normal case is detected, a measure such as stopping a line can be taken, whereby it is possible to optimize a sorting condition and prevent a foreign material from being mixed due to charging defect of resin pieces.

The other operation of the electrostatic sorting device 500 according to Embodiment 2 is the same as that of the electrostatic sorting device 500 according to Embodiment 1, and the description thereof is omitted.

As described above, the electrostatic sorting device 500 according to the present Embodiment 2 includes the put-in section 6 for putting the charged resin piece 100a, 100b into the automatic charge amount measurement system 7, and a conveyer is used as the put-in section 6. Thus, the same effects as in Embodiment 1 can be provided.

### Embodiment 3

In Embodiment 3, a case where the partitions 150 provided to the recovery container 140 are a movable type will be described.

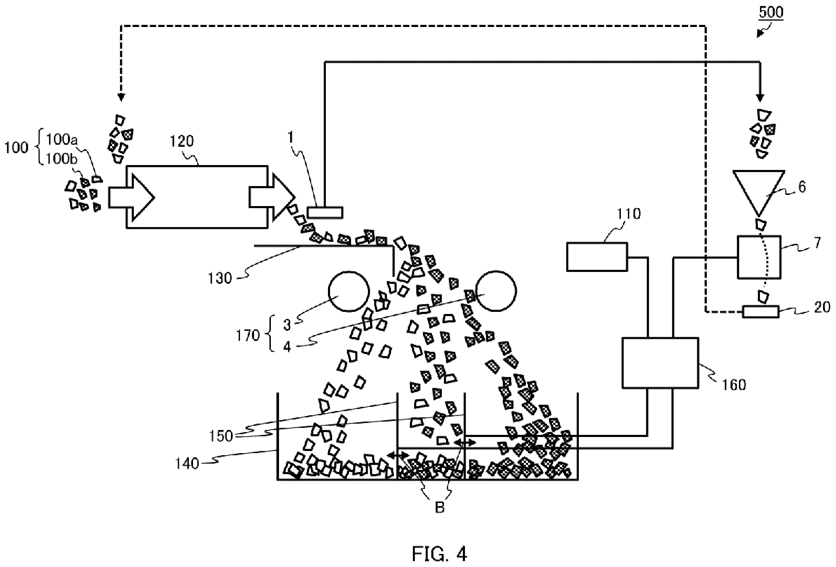

FIG. 4 shows the configuration of the electrostatic sorting device 500 according to Embodiment 3 of the present invention. As shown in FIG. 4, in the electrostatic sorting device 500 according to Embodiment 3 of the present invention, the partitions 150 provided to the recovery container 140 are a movable type, and a sorting condition control section 160 connected to the automatic charge amount measurement system 7, the high-voltage power supply 110, and the partitions 150, is provided.

The partitions 150 are provided so as to be movable in a direction B through connection with an actuator (not shown), and output voltage of the high-voltage power supply 110 and movement of the partitions 150 can be controlled by the sorting condition control section 160.

The other configuration of the electrostatic sorting device 500 according to Embodiment 3 is the same as that of the electrostatic sorting device 500 according to Embodiment 1, and the description thereof is omitted.

Next, operation of the electrostatic sorting device 500 according to Embodiment 3 of the present invention will be described with reference to FIG. 4.

Charge amount data of a mixture of resin pieces measured by the automatic charge amount measurement system 7 is analyzed by the calculation section 16 in the automatic charge amount measurement system 7, a sorting condition is determined in accordance with a charge amount tendency, and a signal is transmitted to the sorting condition control section 160.

On the basis of the received signal, the sorting condition control section 160 controls the high-voltage power supply 110 or the partitions 150, thereby performing sorting under an optimum condition according to the charge amount tendency of resin pieces.

For example, in a case where resin pieces as a whole have a strong tendency toward positive charging, the partition positions are moved to the first opposed electrode 3 side (relatively negative). Conversely, in a case where a negative charging tendency is strong, the partition positions are moved to the second opposed electrode 4 (relatively positive).

In a case where there is such a tendency that the charge amounts of resin pieces as a whole are higher than in a normal case, output voltage of the high-voltage power supply 110 is reduced, and conversely, in a case where there is such a tendency that the charge amounts of resin pieces as a whole are lower than in a normal case, output voltage of the high-voltage power supply 110 is increased.

As described above, in a case where a charge amount tendency different from that in a normal case is detected due to change of the materials of resin pieces or the like, the sorting condition of the electrostatic sorting device can be optimized, whereby stable sorting performance can be achieved.

The other operation of the electrostatic sorting device 500 according to Embodiment 3 is the same as that of the electrostatic sorting device 500 according to Embodiment 1, and the description thereof is omitted.

As described above, the electrostatic sorting device 500 according to the present Embodiment 3 includes the recovery container 140 to which the partitions 150 are provided so as to be movable, and the partitions 150 are moved in accordance with the charge amounts of the resin pieces 100a, 100b.

Thus, in a case where a charge amount tendency different from that in a normal case is detected due to change of the materials of resin pieces or the like, the sorting condition of the electrostatic sorting device can be optimized, whereby stable sorting performance can be achieved.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated.

At least one of the constituent components mentioned in at least one of the preferred embodiments may be selected and combined with the constituent components mentioned in another preferred embodiment.

### DESCRIPTION OF REFERENCE CHARACTERS

- 6: put-in section
- 7: automatic charge amount measurement system
- 8: first conductive member
- 9: second conductive member
- 10: electrostatic induction charge waveform measurement section
- 16: calculation section
- 17: static elimination section
- 18: object detection section
- 100: sorting target
- 100a, 100b: resin piece
- 120: charging section
- 500: electrostatic sorting device

## Claims

1. An electrostatic sorting device which charges plural kinds of resin pieces and causes the charged resin pieces to fall in the electrostatic field space, to sort the resin pieces, the electrostatic sorting device comprising:
a charge amount measurement system which calculates charge amounts of the resin pieces,
wherein the charge amount measurement system picks some of the charged resin pieces before the sorting, and calculates the charge amounts of the picked resin pieces.

2. The electrostatic sorting device
according to claim 1,
wherein the charge amount measurement system includes a detection section which detects each picked resin piece, a measurement section which measures a charge waveform of charge electrostatically induced by charge of the detected resin piece, and a calculation section which calculates the charge amount on the basis of the charge waveform.

3. The electrostatic sorting device
according to claim 2,
wherein the charge amount measurement system includes a tubular conductive member into which the resin piece is put, and the measurement section measures the charge waveform of the put resin piece via the conductive member.

4. The electrostatic sorting device
according to claim 3,
wherein the conductive member includes a static elimination section for making connection to a ground, and at the same time as the resin piece is detected by the detection section, connection to the ground is opened.

5. The electrostatic sorting device
according to any one of claims 2 to 4,
further comprising a put-in section for putting the charged resin piece into the charge amount measurement system, wherein
the put-in section has a shape tapered downward in a vertical direction.

6. The electrostatic sorting device
according to claim 2,
further comprising a conveyer for putting the charged resin piece into the charge amount measurement system.

7. The electrostatic sorting device
according to any one of claims 1 to 6,
further comprising a recovery container having a partition provided so as to be movable,
wherein the partition is moved in accordance with the charge amounts of the resin pieces.
